# EUROPEAN PATENT APPLICATION

(11) **EP 1 647 883 A1**
(43) Date of publication of application: **19.04.2006**
(21) Application number: 04292435.7
(22) Date of filing: 13.10.2004
(51) Int. Cl.: G06F 9/44

(54) **User interface using text compression**

(71) Applicant: Thomson Licensing, 92100 Boulogne-Billancourt (FR)
(72) Inventor: Lee, Guan Swee, 529236 (SG); Wu, Ting, 680620 (SG)
(74) Representative: Thies, Stephan

(57) **Abstract**

The present invention relates to a user interface with the capability of displaying multiple languages, and to a device using such user interface.

It is an object of the invention to propose a device having a user interface capable of supporting multiple languages with a reduced amount of memory space for storing the user interface text strings.

According to the invention, this object is achieved by a device where data for a selected language are present in non-compressed form while data for non-selected languages are present in compressed form.

## Description

The present invention relates to a user interface with the capability of displaying multiple languages, and to a device using such user interface.

Nowadays it is common for electronic devices to provide a user interface in a variety of languages. For example, in a typical TV-DVD combo, i.e. a television set with a built-in DVD player, up to fourteen languages are supported by the software. All necessary user interface text strings in these different languages are stored in a flash memory in the form of language blocks. Each language block contains an array of all possible employed user interface text strings for a specific language. All language blocks have the same contents, i.e. the arrays contain the same amount of strings and these strings are arranged in the same order, but in different translation languages.

For example, US 6,559,861 discloses an apparatus for displaying a page of a user interface of a computer system in multiple languages. The computer system includes a memory that contains a plurality of string values that correspond to text in different languages. A memory object represents a page of the user interface and includes a set of variables formatted to be associated with string values. A processor selectively associates the variables with the string values that correspond to the language selected by the user.

While in a computer system the amount of memory used for the user interface text strings is of little importance, in consumer electronics devices such as the above mentioned TV-DVD-combo a significant amount of flash memory space is needed for storing the language blocks for all languages supported by the software. In fact, an increasing demand to include new features in the software has made the amount of available flash memory space a major concern. This problem is even aggravated in that at the same time due to cost restrictions the physical memory space for storing the source code is not increased.

It is, therefore, an object of the invention to propose a device having a user interface capable of supporting multiple languages with a reduced amount of memory space for storing the user interface text strings.

According to the invention, this object is achieved by a device having a user interface capable of supporting multiple languages, where data for a selected language are present in non-compressed form while data for non-selected languages are present in compressed form. Due to the compression the data for the unselected languages require only a reduced amount of memory space. Only the data for the selected language are non-compressed and require additional memory space. Preferably the data for the different languages are text strings, which can be efficiently compressed. Of course, the data can also be present in the form of images etc.

Favorably the compressed data are stored in a first memory and the non-compressed data are stored in a second memory. As the data are preferably compressed during compilation of the software, the compressed data are stored as part of an executable file to the memory used for the firmware of the device, which usually is a flash memory. The uncompressed data for the selected language are then stored in a further memory, usually a random access memory (e.g. SDRAM), which is used for storing the application code of the device. Advantageously the data are uncompressed on the fly.

Preferably the device includes a table indicating the required memory space for the non-compressed data of the different languages. This allows to easily allocate the required block of memory space in the second memory before uncompressing the data for the selected language.

Though in the above the invention has been explained with reference to the text strings of a user interface supporting multiple languages, the invention is likewise useful for other applications. For example, in a device having a plurality of operation modes, e.g. reading in contrast to recording, playback of a specific type of medium etc., favorably only the text strings relating to the current mode are uncompressed, while the text strings relating to the other modes remain compressed. Similarly, instead of text strings other types of data can also be compressed, stored, and decompressed upon demand, e.g. algorithms for different types of audio coding/decoding standards, background pictures etc.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: shows an implementation of a user interface according to the prior art, and
- Fig. 2: depicts an implementation of a user interface according to the invention.

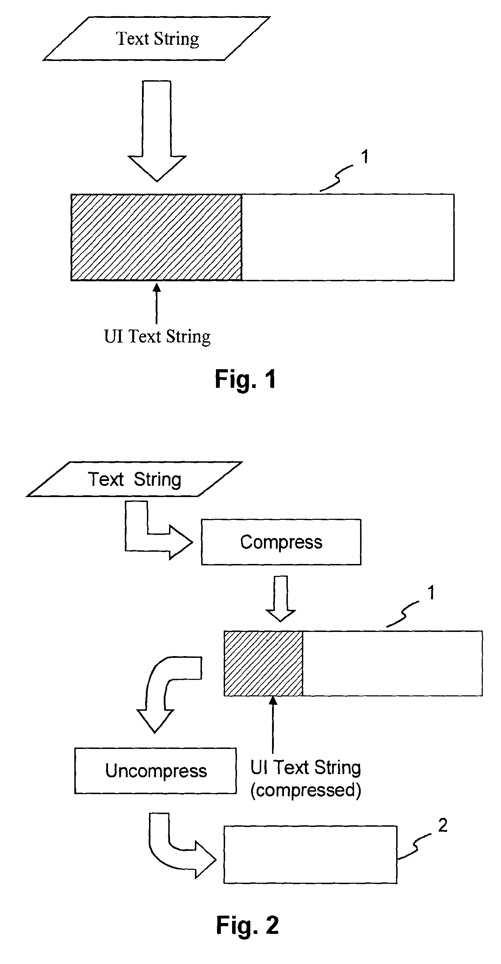

Fig. 1 depicts an implementation of a user interface according to the prior art. The text strings are stored directly to the flash memory 1 in the form of language blocks. The software extracts the necessary text strings directly from the flash memory 1.

According to the invention, which is depicted in Fig. 2, the text strings are compressed using for example the "Huffman coding" compression method. This compression is preferably performed during the software compilation phase. The compressed text strings are stored to the flash memory 1 in the form of language blocks as part of an executable file.

Upon start up from the mains or a user selection of a particular language setting, the software performs the following steps:
1) Release the memory space for a previously used language block in a further memory 2 (e.g. SDRAM) if it has been used.
2) Allocate a block of memory space in the further memory 2 with a size as indicated in an array including the required memory space for the different language blocks.
3) Uncompress the selected language block on the fly into the newly allocated memory space of the further memory 2.
4) Set a string pointer to the newly uncompressed language block in the further memory 2.

The software then uses the uncompressed text strings stored in the further memory 2.

## Claims

1. Device having a user interface capable of supporting multiple languages, **characterized in that** data for a selected language are present in non-compressed form while data for non-selected languages are present in compressed form.

2. Device according to claim 1, **wherein** the compressed data are stored in a first memory (1) and the non-compressed data are stored in a second memory (2).

3. Device according to claim 1 or 2, **wherein** the first memory (1) is a flash memory and the second memory (2) is an SDRAM.

4. Device according to one of claims 1 to 3, **wherein** the data are uncompressed on the fly.

5. Device according to one of claims 1 to 4, **further** including a table indicating the required memory space for the non-compressed data of the different languages.

6. Device according to one of claims 1 to 5, **wherein** the data are text strings.

7. Device according to claim 1, **wherein** instead of supporting multiple languages other multiple possibilities are supported, wherein data for a selected possibility are present in non-compressed form while data for non-selected possibilities are present in compressed form.

8. Device according to claim 7, **wherein** the multiple possibilities are different operation modes of the device.

9. Device according to claim 7, **wherein** the multiple possibilities are different types of audio or video coding or decoding standards.

10. Device according to claim 7, **wherein** the multiple possibilities are different background picture modes.
